# EUROPEAN PATENT APPLICATION

(11) **EP 3 916 222 A1**
(43) Date of publication of application: **01.12.2021**
(21) Application number: 20177018.7
(22) Date of filing: 28.05.2020
(51) Int. Cl.: F03D 17/00

(54) **A COMPUTER-IMPLEMENTED METHOD FOR GENERATING A PREDICTION MODEL FOR PREDICTING ROTOR BLADE DAMAGES OF A WIND TURBINE**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

The invention refers to a computer-implemented method for generating a prediction model for predicting rotor blade damages of a wind turbine, wherein the method processes previously acquired data (DA), said data (DA) comprising data sets (DS) for a plurality of wind turbines, where each data set (DS) comprises respective values of variables, the variables including one or more turbine variables (T1, T2, ..., T10), one or more weather variables (W1, W2, ..., W4) and one or more damage variables (D1, D2, ..., D19), wherein the method comprises the following steps:
a) discretizing the values of those variables which are numerical variables, resulting in modified data sets (DS');
b) structure learning of a plurality of Bayesian networks (BN1, BN2 ..., BNN) based on the modified data sets (DS'), where each Bayesian network (BN1, BN2 ..., BNN) is learned by another learning method;
c) determining an optimum Bayesian network (OBN) out of the plurality of Bayesian networks (BN1, BN2 ..., BNN) based on a performance measure (PM) reflecting the prediction quality of a respective Bayesian network (BN1, BN2 ..., BNN), where the optimum Bayesian network (OBN) has the best performance measure (PM);
d) parameter learning of the optimum Bayesian network (OBN) based on the modified data sets (DS'), resulting in conditional probabilities (CP), where the optimum Bayesian network (OBN) in combination with the conditional probabilities (CP) is the prediction model.

## Description

The invention refers to a computer-implemented method for generating a prediction model for predicting rotor blade damages of a wind turbine.

In order to ensure a reliable operation of wind turbines in a wind farm, the rotor blades of the respective wind turbines are inspected in regular intervals. As a consequence, there are large data bases in which blade damages reported during the inspection of wind farms are stored. Those data may be used for building prediction models to predict blade damages.

Due to the high dimensionality of the collected damage data, conventional statistical methods cannot be used because those methods create prediction models that will take years for solving.

It is an object of the invention to provide a computer-implemented method for generating a prediction model for predicting rotor blade damages of a wind turbine where the generated prediction model can provide prediction results with manageable computational effort in a reasonable time.

This object is solved by the method according to claim 1. Preferred embodiments of the invention are defined in the dependent claims.

The method of the invention refers to a computer-implemented method for generating a prediction model which is configured to predict rotor blade damages of a wind turbine. In other words, the method uses a computer in order to generate such a prediction model which can be regarded as a computer program being capable to predict rotor blade damages.

The method of the invention processes previously acquired data. These data comprise data sets for a plurality of wind turbines, where each data set refers to a specific wind turbine, i.e. a wind turbine which is or has been in operation. A corresponding data set comprises respective values of variables, the variables including one or more turbine variables defining characteristics of the specific wind turbine, one or more weather variables defining weather conditions averaged over the operation time of the specific wind turbine and one or more damage variables defining damages having occurred on at least one rotor blade of the specific wind turbine during the operation of the specific wind turbine.

Based on the above data sets, the method performs steps a) to d) as described in the following. In step a), the values of those variables which are numerical variables are discretized, resulting in modified data sets. Numerical variables are variables assuming numerical values with a numerical meaning. I.e., the numbers of those variables express certain quantities and not categories as it is the case for categorical variables which may also be included in the data sets. Although categorical variables may be expressed as numbers, these numbers do not have the meaning of a numerical value in the sense of a quantity as it is the case for numerical variables.

In step b) of the method according to the invention, structure learning of a plurality of Bayesian networks is performed based on the modified data sets. Bayesian networks are known for a skilled person. Each Bayesian network learned in step b) is a probabilistic directed acyclic graph comprising the variables as node and defining the probabilistic dependencies between nodes by directed edges. Each Bayesian network is learned by another learning method where corresponding learning methods performing the structure learning are well-known for a skilled person and thus are not described in detail herein.

In a step c) of the method according to the invention, an optimum Bayesian network out of the plurality of Bayesian networks is determined based on a performance measure reflecting the prediction quality of a respective Bayesian network, where the optimum Bayesian network has the best performance measure, i.e. provides the best prediction quality.

In a step d) of the method according to the invention, parameter learning of the optimum Bayesian network based on the modified data sets (i.e. all modified data sets) is performed. Methods of parameter learning are well-known for a skilled person and thus are not described in detail herein. As a result, conditional probabilities between variables representing nodes linked by respective directed edges in the optimum Bayesian network are determined. The optimum Bayesian network in combination with those conditional probabilities is the prediction model generated by the method according to the invention.

The prediction model obtained as described above is capable to predict corresponding values of the damage variables (or a subset thereof) by using a data set (or a subset thereof) of known values of turbine variables and weather variables of a wind turbine for which damages shall be predicted. Preferably, the prediction model is implemented in combination with a user interface enabling a user to define specific prediction tasks performed by the prediction model, i.e. the optimum Bayesian network. As a result, the prediction model provides corresponding probabilities for values of damage variables of a turbine having the turbine characteristics as defined by the values of the turbine variables and being located at a site in which weather conditions as defined by the values of the weather variables apply.

The method of the invention provides a reliable prediction model which also takes weather data into account. Due to the use of Bayesian networks, the predictions can be calculated with low computational effort in a reasonable amount of time.

The turbine variables, the weather variables and the damage variables can be defined differently. In the following, preferred examples for those variables will be given.

In one embodiment, the one or more turbine variables comprise one or more of the following variables:
- a turbine variable specifying the generator type used in the specific wind turbine;
- a turbine variable specifying the rotational speed for which the rotor of the specific wind turbine is designed;
- a turbine variable specifying the rotor diameter of the specific wind turbine;
- a turbine variable specifying a category to which the specific wind turbine belongs, where this category is a higher category than the type of the specific wind turbine as defined below;
- a turbine variable specifying the altitude of the specific wind turbine;
- a turbine variable specifying the type of the specific wind turbine;
- a turbine variable specifying the rotor tip speed for which the specific wind turbine is designed;
- a turbine variable specifying the age of the specific wind turbine;
- a turbine variable specifying the total amount of time where the specific wind turbine experiences a wind speed over a predetermined value during its operation;
- a turbine variable specifying whether the specific wind turbine is an onshore or offshore wind turbine.

In another preferred embodiment, the one or more weather variables comprise one or more of the following variables:
- a weather variable specifying the average wind speed at the location of the specific wind turbine during the operation time of the specific wind turbine;
- a weather variable specifying the average air humidity at the location of the specific wind turbine during the operation time of the specific wind turbine;
- a weather variable specifying the average lightning density which is the average number of lightning strikes per time unit and per area unit around the location of the specific wind turbine during the operation time of the specific wind turbine;
- a weather variable specifying the average precipitation per time unit and per area unit around the location of the specific wind turbine during the operation time of the specific wind turbine.

In another preferred embodiment, the one or more damage variables comprise one or more of the following variables:
- one or more erosion occurrence variables, each specifying the number of erosion occurrences with a respective severity level and/or of a respective type in a predetermined region of at least one rotor blade of the specific wind turbine during the operation time of the specific wind turbine;
- one or more erosion area variables, each specifying the total area of all erosions with a respective severity level and/or of a respective type occurred in a predetermined region of at least one rotor blade of the specific wind turbine during the operation time of the specific wind turbine;
- one or more superficial damage occurrence variables, each specifying the number of superficial damage occurrences with a respective severity level and/or of a respective type in a predetermined region of at least one rotor blade of the specific wind turbine during the operation time of the specific wind turbine;
- one or more superficial damage area variables, each specifying the total area of all superficial damages with a respective severity level and/or of a respective type occurred in a predetermined region of at least one rotor blade of the specific wind turbine during the operation time of the specific wind turbine;
- a crack variable specifying the number of cracks occurred on at least one rotor blade of the specific wind turbine during the operation time of the specific wind turbine;
- an accessory loss variable specifying the number of accessory parts lost from at least one rotor blade of the specific wind turbine during the operation time of the specific wind turbine;
- a contamination occurrence variable specifying the number of contamination occurrences in a predetermined region of at least one rotor blade of the specific wind turbine during the operation time of the specific wind turbine;
- a contamination area variable specifying the total area of all contaminations occurred in a predetermined region of at least one rotor blade of the specific wind turbine during the operation time of the specific wind turbine;
- a lightning protection system failure variable specifying the number of failures of the lightning protection system of at least one rotor blade of the specific wind turbine which occurred during the operation time of the specific wind turbine.

The above term "predetermined region" may refer to a specific portion of the respective rotor blade, e.g. the leading edge of the respective rotor blade. Nevertheless, a predetermined region may also refer to the complete area of the rotor blade.

In a particularly preferred embodiment, the discretization step a) is based on the Hartemink's information-preserving algorithm providing a discretization with low information loss. This algorithm is well-known for a skilled person and thus is not described in detail herein.

Different learning methods may be used in step b) in order to obtain a plurality of Bayesian models. Preferably, the learning methods are implemented by using the R package "bnlearn" for Bayesian network learning (https://www. bnlearn.com/). This package can be downloaded from the Internet. Examples of learning methods which can be used for the structure learning in step b) are the PC Algorithm, Grow-Shrink, Incremental Association Markov Blanket, Fast Incremental Association, Interleaved Incremental Association, Hill Climbing and Tabu Search.

In a particularly preferred embodiment, one or more cross validations are performed for each Bayesian networks of the plurality of Bayesian networks in step c) of the method according to the invention. In each cross validation, a parameter learning of the respective Bayesian network based on a first part (i.e. a training set) of the modified data sets is performed, resulting in conditional probabilities between variables representing nodes linked by respective directed edges in the respective Bayesian network. Thereafter, a prediction of the values of the one or more damage variables of a second part (i.e. a test set) of the modified data sets being different from the first part is performed by the respective Bayesian network in combination with the conditional probabilities based on the values of the one or more turbine variables and weather variables of the second part of the modified data sets.

Preferably, the first and second parts altogether constitute all modified data sets. In case that several cross validations are performed for a respective Bayesian network, the first and second parts are different from one cross validation to another. Preferably, the second part of the modified data sets refer to data sets of wind turbines belonging to the same wind park.

After having performed the cross validations, a prediction quality parameter is determined for the respective cross validation by comparing the predicted values with the actual values of the one or more damage variables of the second part of the modified data sets. This prediction quality parameter is the performance measure in case of a single cross validation. In case of several cross validations, the average of the prediction quality parameters over the cross validations is the performance measure.

Different performance measures may be used in the method according to the invention. Preferably, the performance measure is based on the well-known F1 score. Nevertheless, the Precision or the Recall or any other suitable measure reflecting the prediction quality may be used in the method of the invention.

In a particularly preferred embodiment, newly acquired data sets are added to the previously acquired data, e.g. within regular time intervals. Afterwards, steps a) to d) as defined above are performed for the previously acquired data now additionally comprising the newly acquired data sets, thus resulting in an updated prediction model. This embodiment ensures a regular update of the prediction model by new data sets.

Besides the above method for generating a prediction model, the invention also refers to a computer-implemented method for predicting rotor blade damages of a wind turbine, where the method processes the prediction model which is generated by the method of the invention or by one or more preferred embodiments thereof. This means that the method for generating the prediction model is part of the method for predicting rotor blade damages. Alternatively, the method for predicting rotor blade damages processes the prediction model which has been generated beforehand by the method according to the invention or by one or more preferred embodiments thereof. In this case, only the output of the computer-implemented method for generating a prediction model is used and the method for generating the prediction model is not part of the method for predicting rotor blade damages. In both cases, the value of at least one damage variable is predicted based on known values of at least one turbine variable and at least one weather variable valid for the wind turbine for which the prediction is performed.

Besides the above methods, the invention refers to a computer program product with program code, which is stored on a non-transitory machine-readable carrier, for carrying out the method according to the invention or according to one or more preferred embodiments of the invention.

Furthermore, the invention refers to a computer program with program code for carrying out the method according to the invention or according to one or more preferred embodiments of the invention.

In the following, an embodiment of the invention will be described in detail with respect to the accompanying drawings, wherein:
- Fig. 1: is a flowchart illustrating the steps performed in a variant of the method according to the invention; and
- Fig. 2: is a diagram illustrating an optimum Bayesian network determined based on the method as shown in Fig. 1.

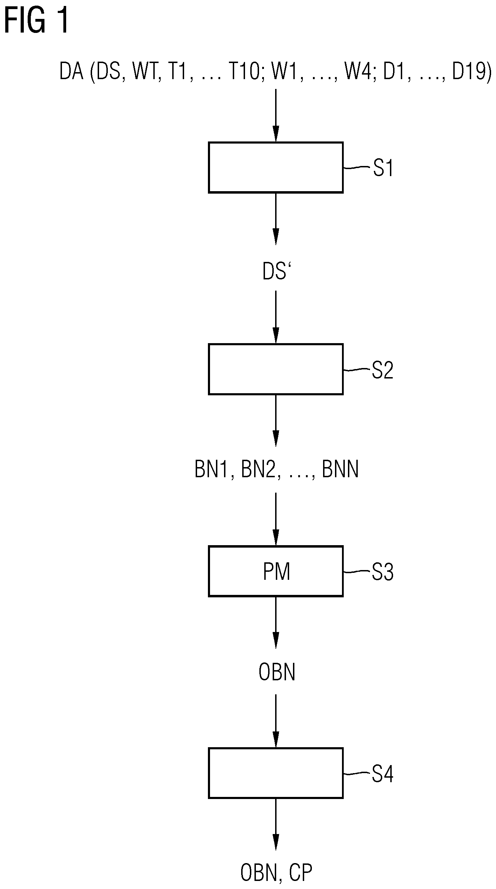

The method as described in the following processes data DA in the form of a plurality of data sets DS, where each data set refers to a specific wind turbine. In other words, there are a plurality of data sets referring to different specific wind turbines designated as WT in Fig. 1. Each data set comprises respective values of variables of a specific wind turbine. The variables include a plurality of turbine variables T1 to T10 defining characteristics of the specific wind turbine WT, a plurality of weather variables W1 to W4 defining weather conditions averaged over the operation time of the specific wind turbine WT and a plurality of damage variables D1 to D19 defining damages having occurred on a rotor blade (i.e. a specific rotor blade) of the specific wind turbine WT during the operation time of the specific wind turbine. In an alternative, the damages may also cover the damages of several rotor blades or all (three) rotor blades of the specific wind turbine. The above variables will be described in detail in the following. Nevertheless, those variables are examples and other types of variables for describing characteristics of the wind turbine, averaged weather conditions and damages may be used in modified embodiments.
Turbine variable T1 = WTG_Type:
   This variable specifies the generator type used in the specific wind turbine.
Turbine variable T2 = RPM:
   This variable specifies the rotational speed for which the rotor of the specific wind turbine is designed.
Turbine variable T3 = Diameter:
   This variable specifies the rotor diameter of the specific wind turbine.
Turbine variable T4 = Platform:
   This variable defines a category of the specific wind turbine which is a category higher than the category "Turbine_Type" defined below.
Turbine variable T5 = Turbine_Altitude:
   This variable specifies the altitude of the specific wind turbine.
Turbine variable T6 = Turbine_Type:
   This category specifies the type of the wind turbine which can be specified by a respective type identifier.
Turbine variable T7 = Tip_Speed:
   This variable specifies the rotor tip speed for which the specific wind turbine is designed.
Turbine variable T8 = Age:
   This variable specifies the age of the specific wind turbine.
Turbine variable T9 = Stress_Hours:
   This variable specifies the total amount of time where the specific wind turbine experiences a wind speed over a speed of 23 m/s during its operation.
Turbine variable T10 = Park_Type:
   This variable specifies whether the specific wind turbine is an onshore or offshore wind turbine.
Weather variable W1 = MAWS:
   This variable specifies mean annual wind speed at the location of the specific wind turbine during the operation time of the specific wind turbine.
Weather variable W2 = Humidity:
   This variable specifies the average air humidity at the location of the specific wind turbine during the operation time of the specific wind turbine.
Weather variable W3 = Lightning:
   This variable specifies the average lightning density which is the average number of lightning strikes per year within 1 km² around the location of the specific wind turbine during the operation time of the specific wind turbine.
Weather variable W4 = Precipitation:
   This variable specifies the average precipitation (referring to rain and snow) per year and per m² around the location of the specific wind turbine during the operation time of the specific wind turbine.
Damage variable D1 = Erosion2:
   This variable specifies the number of erosion occurrences with a medium severity level (i.e. level 2) at the leading edge of a rotor blade of the specific wind turbine during the operation time of the specific wind turbine.
Damage variable D2 = Erosion2_Area:
   This variable specifies the total area of all erosions with a medium severity level (i.e. level 2) occurred at the leading edge of a rotor blade of the specific wind turbine during the operation time of the specific wind turbine.
Damage variable D3 = Erosion3:
   This variable specifies the number of erosion occurrences with a high severity level (i.e. level 3) at the leading edge of a rotor blade of the specific wind turbine during the operation time of the specific wind turbine.
Damage variable D4 = Erosion3_Area:
   This variable specifies the total area of all erosions with a high severity level (i.e. level 3) occurred at the leading edge of a rotor blade of the specific wind turbine during the operation time of the specific wind turbine.
Damage variable D5 = Erosion4:
   This variable specifies the number of erosion occurrences with a very high severity level (i.e. level 4) at the leading edge of a rotor blade of the specific wind turbine during the operation time of the specific wind turbine.
Damage variable D6 = Erosion4_Area:
   This variable specifies the total area of all erosions with a very high severity level (i.e. level 4) occurred at the leading edge of a rotor blade of the specific wind turbine during the operation time of the specific wind turbine.
Damage variable D7 = Surface_Voids:
   This variable specifies the number of surface void occurrences at a rotor blade of the specific wind turbine during the operation time of the specific wind turbine, where surface voids refer to erosions at other parts of the rotor blade than the leading edge.
Damage variable D8 = Surface Voids Area:
   This variable specifies the total area of all surface voids occurred at one rotor blade of the specific wind turbine during the operation time of the specific wind turbine.
Damage variable D9 = Paint_Damage:
   This variable specifies the number of paint damage occurrences at any location on a rotor blade of the specific wind turbine during the operation time of the specific wind turbine. Paint damages refer to damages in the form of peeling and chipping paint which do not go deeper inside the rotor blade as it is the case for erosions or surface voids.
Damage variable D10 = Paint_Damage_Area:
   This variable specifies the area of all paint damages occurred at any location on a rotor blade of the specific wind turbine during the operation time of the specific wind turbine.
Damage variable D11 = Cracks:
   This variable specifies the number of cracks occurred at any location on a rotor blade of the specific wind turbine during the operation time of the specific wind turbine.
Damage variable D12 = Pinholes:
   This variable specifies the number of pinhole occurrences at any location on a rotor blade of the specific wind turbine during the operation time of the specific wind turbine. Pinholes are well-known damages and refer to small holes within the paint of the rotor blade which are different from the above paint damages referring to peeling and chipping paint.
Damage variable D13 = Pinholes Area:
   This variable specifies the total area of all pinholes occurred on a rotor blade of the specific wind turbine during the operation time of the specific wind turbine.
Damage variable D14 = Add_On:
   This variable specifies the number of accessory parts lost from a rotor blade of the specific wind turbine during the operation time of the specific wind turbine.
Damage variable D15 = Contamination:
   This variable specifies the total area of all contaminations occurred at any location on a rotor blade of the specific wind turbine during the operation time of the specific wind turbine.
Damage variable D16 = Contamination_Area:
   This variable specifies the total area of all contaminations occurred on a rotor blade of the specific wind turbine during the operation time of the specific wind turbine.
Damage variable D17 = LPS:
   This variable specifies to the number of failures of the lightning protection system (i.e. of the lightning conductor) of a rotor blade of the specific wind turbine which occurred during the operation time of the specific wind turbine.
Damage variable D18 = Scratches_Gouges:
   This variable specifies the number of occurrences of scratches and gouges at any location on a rotor blade of the specific wind turbine during the operation time of the specific wind turbine. Scratches and gouges are well-known superficial damages on a rotor blade which can be clearly distinguished from other damages.
Damage variable D19 = Scratches_Gouges_Area:
   This variable specifies the total area of all scratches and gouges occurred on a rotor blade of the specific wind turbine during the operation time of the specific wind turbine.

With respect to the above damage variables, the variables D1, D3, D5 and D7 can be regarded as erosion occurrence variables in the sense of the patent claims. Furthermore, the variables D2, D4, D6 and D8 can be regarded as erosion area variables in the sense of the patent claims. Moreover, the variables D9, D12 and D18 can be regarded as superficial damage occurrence variables in the sense of the patent claims whereas the variables D10, D13 and D19 can be regarded as superficial damage area variables in the sense of the patent claims.

In the method as shown in Fig. 1, the data DA are at first discretized in a discretization step S1. To do so, the values of those variables in data sets DS referring to numerical variables with numerical values are assigned to a predetermined number of levels. In the embodiment described herein, all variables of the respective data sets DS refer to numerical variables except the variables T1, T4, T6 and T10 which are categorical variables defining corresponding categories with respect to the wind turbine. The discretization step S1 is necessary to enable the learning of Bayesian networks as described below.

Different methods for the discretization step S1 can be used. In the embodiment herein, the discretized data are generated by the well-known Hartemink's information-preserving discretization which retains as much information as possible. The Hartemink's information-preserving discretization is well-known for a skilled person and thus will not be described in detail herein.

When applying the Hartemink's information-preserving discretization, a corresponding number of levels for each variable to be discretized needs to be defined beforehand. In the embodiment herein, the discretization is performed such that all damage variables have three levels of discretization. In case that a damage variable represents a number (e.g. a number of occurrences), one level refers to a high number, another level to a medium-sized number and yet another level to a low number. In case that a damage variable represents an area (e.g. the total area of all erosions), one level refers to a large area, another level to a medium-sized area and yet another level to a low area. Contrary to that, for the numerical levels referring to turbine variables and weather variables, a number of seven levels was used for the Hartemink's information-preserving discretization.

The discretization step S1 will result in modified data sets DS' which include the corresponding levels for the discretized variables. Based on these modified data sets DS', a well-known structure learning of a plurality of Bayesian networks is performed in step S2. A Bayesian network refers to a directed acyclic graph comprising the variables as nodes and defining the probabilistic dependencies between nodes by respective directed edges. This structure learning is performed several times using the data sets DS' based on different learning methods. I.e., each learning method results in another Bayesian network of the plurality of Bayesian networks. Examples of such learning methods have been mentioned above. In the embodiment described herein, learning methods from the R package "bnlearn" also mentioned above has been applied to the data sets DS'. In a preferred variant, about 20 or more Bayesian networks, e.g. 25 Bayesian networks, are generated in step S2 by different learning methods. Those Bayesian networks are indicated as BN1, BN2, ..., BNN in Fig. 1.

The Bayesian networks BN1 to BNN are thereafter processed by step S3 in which several cross validations are performed for each of the Bayesian networks BN1 to BNN. In a cross validation performed for a corresponding Bayesian network, parameter learning of this Bayesian network based on a first part of the modified data sets is performed, resulting in conditional probabilities between variables representing nodes linked by respective directed edges in the Bayesian network. Thereafter, a prediction of the values of the damage variables of a second part of the modified data sets different from the first part is performed by the corresponding Bayesian network in combination with the condition probabilities based on the values of the turbine variables and the weather variables of the second part of the modified data sets.

As mentioned above, several cross validations are performed for each Bayesian network. However, the method may also be used by only performing one cross validation for each Bayesian network. In case of several cross validations, the first part of the modified sets used for parameter learning and the second part of the modified sets used for prediction are chosen differently between the cross validations.

After having performed the cross validations, the well-known F1 score is determined for each cross validation of a respective Bayesian network. The F1 score refers to a higher prediction quality the higher the score is. The F1 score is calculated based on the predicted and actual values of the damage variables of the second part of the modified data sets obtained for a corresponding cross validation. All F1 scores of the cross validations performed for a respective Bayesian network are averaged and form a prediction measure PM. In case that only one cross validation is performed for each Bayesian network, the F1 score calculated for this cross validation directly corresponds to the performance measure PM.

Out of the plurality of Bayesian networks BN1 to BNN, the network is identified having the best performance measure PM (i.e. the highest average F1 score) reflecting the best prediction quality. This network is chosen as the optimum Bayesian network OBN and forms the result of step S3 in Fig. 1.

In a next step S4, a parameter learning of the optimum Bayesian network OBN is performed based on all modified data sets DS', resulting in conditional probabilities between variables representing nodes linked by respective directed edges in the optimum Bayesian network. As mentioned above, parameter learning methods for Bayesian networks are well-known for a skilled person. The optimum Bayesian network in combination with those conditional probabilities forms the prediction model which is the result of the method of Fig. 1.

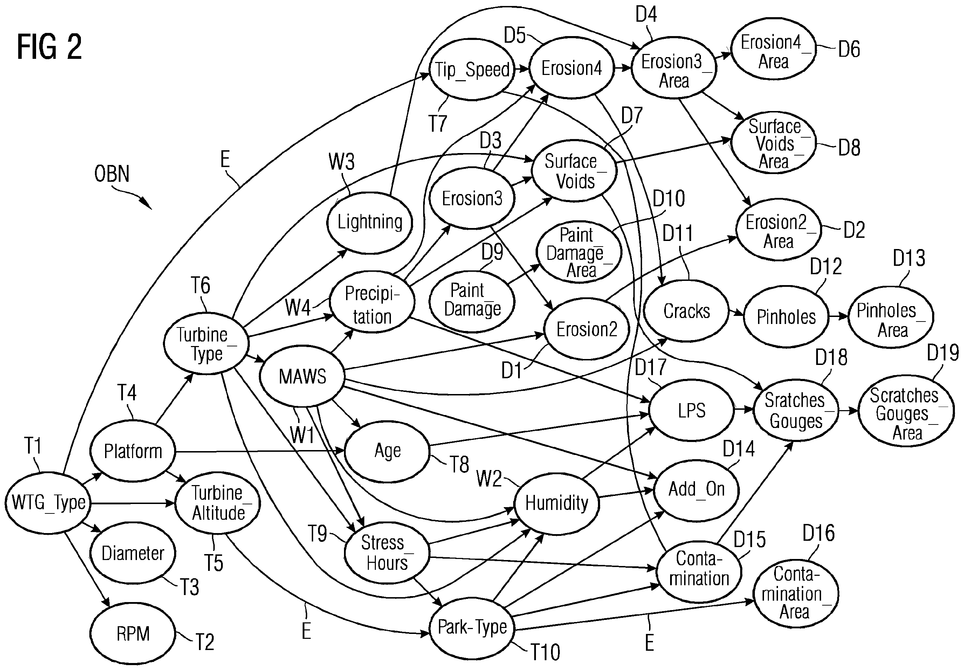

Fig. 2 shows an example of an optimum Bayesian network OBN obtained by the method as described above. As can be seen in Fig. 2, the Bayesian network OBN comprises a plurality of nodes where each node corresponds to one of the variables T1 to T10, W1 to W4 and D1 to D19 as described before. Probabilistic dependencies between variables are expressed by directed edges. For the sake of clear presentation, only a few of those edges are indicated with reference numeral E in Fig. 2. For each node, there exists a conditional probability table with respect to its parent nodes, i.e. the nodes from which edges terminating in the respective node originate. Within a table, each conditional probability refers to a probability that the variable presented by the node assumes a specific value in case that the parent nodes assume specific values. In other words, conditional probabilities for all possible values of the variable of a respective node under all possible conditions of values of variables representing parent nodes are defined for the nodes in the Bayesian network.

With the prediction model obtained in step S4 of Fig. 1, damage values for an arbitrary wind turbine based on corresponding values of turbine variables specifying the turbine and weather data around the turbine can be predicted where prediction means that the optimum Bayesian network OBN provides corresponding probabilities for the levels (i.e. discretized values) of the respective damage variables. This information is used in order to evaluate whether damages and particularly which damages are likely to occur at a wind turbine. The wind turbine may refer to a turbine already in use. Nevertheless, the prediction may also be applied to wind turbines not yet built or installed at the corresponding site in order to evaluate the risk of damages beforehand and in order to determine which wind turbine is suitable at a specific location in order to minimize the risk of damages.

The predictions by the above prediction model are preferably generated in combination with a suitable user interface (particularly a display) making it possible for a user to specify corresponding prediction tasks for wind turbine damages via the user interface and to receive the output of the prediction tasks via the user interface.

In a particularly preferred embodiment, the prediction model provided by the method described above is updated in regular intervals. To do so, new available data sets are downloaded from a cloud system to the computer which generates the prediction model. After having downloaded new available data, the method steps S1 to S4 as described with respect to Fig. 1 are performed once again based on the old data sets in combination with the new available data sets. As a result, an updated prediction model is generated which can thereafter be used for the prediction of damage variables.

The invention as described in the foregoing has several advantages. Particularly, an expanded and improved rotor blade damage prediction can be achieved. This prediction does also consider the weather conditions around wind turbines besides other turbine parameters. Contrary to that, previous theoretical models cannot account for such real-world factors and only will end up with imprecise static results. The prediction model generated by the invention can lead to a better planning of logistics and services provided for a wind turbine. Furthermore, the risk of rotor blade damages can be predicted even before installing a wind farm making it possible to choose appropriate wind turbines for the farm at the site where the farm shall be installed.

## Claims

1. A computer-implemented method for generating a prediction model for predicting rotor blade damages of a wind turbine, wherein the method processes previously acquired data (DA), said data (DA) comprising data sets (DS) for a plurality of wind turbines, where each data set (DS) refers to a specific wind turbine (WT) and comprises respective values of variables, the variables including one or more turbine variables (T1, T2, ..., T10) defining characteristics of the specific wind turbine (WT), one or more weather variables (W1, W2, ..., W4) defining weather conditions averaged over the operation time of the specific wind turbine (WT) and one or more damage variables (D1, D2, ..., D19) defining damages having occurred on at least one rotor blade of the specific wind turbine (WT) during the operation time of the specific wind turbine (WT), wherein the method comprises the following steps:
a) discretizing the values of those variables which are numerical variables, resulting in modified data sets (DS');
b) structure learning of a plurality of Bayesian networks (BN1, BN2 ..., BNN) based on the modified data sets (DS'), where each Bayesian network (BN1, BN2 ..., BNN) is a probabilistic directed acyclic graph comprising the variables as nodes and defining the probabilistic dependencies between nodes by directed edges (E) and where each Bayesian network (BN1, BN2 ..., BNN) is learned by another learning method;
c) determining an optimum Bayesian network (OBN) out of the plurality of Bayesian networks (BN1, BN2 ..., BNN) based on a performance measure (PM) reflecting the prediction quality of a respective Bayesian network (BN1, BN2 ..., BNN), where the optimum Bayesian network (OBN) has the best performance measure (PM);
d) parameter learning of the optimum Bayesian network (OBN) based on the modified data sets (DS'), resulting in conditional probabilities (CP) between variables representing nodes linked by respective directed edges (E) in the optimum Bayesian network (OBN), where the optimum Bayesian network (OBN) in combination with the conditional probabilities (CP) is the prediction model.

2. The method according to claim 1, wherein the one or more turbine variables (T1, T2, ..., T10) comprise one or more of the following variables:
- a turbine variable (T1) specifying the generator type used in the specific wind turbine (WT);
- a turbine variable (T2) specifying the rotational speed for which the rotor of the specific wind turbine (WT) is designed;
- a turbine variable (T3) specifying the rotor diameter of the specific wind turbine (WT);
- a turbine variable (T4) specifying a category to which the specific wind turbine (WT) belongs;
- a turbine variable (T5) specifying the altitude of the specific wind turbine (WT);
- a turbine variable (T6) specifying the type of the specific wind turbine (WT);
- a turbine variable (T7) specifying the rotor tip speed for which the specific wind turbine (WT) is designed;
- a turbine variable (T8) specifying the age of the specific wind turbine (WT);
- a turbine variable (T9) specifying the total amount of time where the specific wind turbine (WT) experiences a wind speed over a predetermined value during its operation;
- a turbine variable (T10) specifying whether the specific wind turbine (WT) is an onshore or offshore wind turbine.

3. The method according to claim 1 or 2, wherein the one or more weather variables (W1, W2, ..., W4) comprise one or more of the following variables:
- a weather variable (W1) specifying the average wind speed at the location of the specific wind turbine (WT) during the operation time of the specific wind turbine (WT);
- a weather variable (W2) specifying the average air humidity at the location of the specific wind turbine (WT) during the operation time of the specific wind turbine (WT);
- a weather variable (W3) specifying the average lightning density which is the average number of lightning strikes per time unit and per area unit around the location of the specific wind turbine (WT) during the operation time of the specific wind turbine (WT);
- a weather variable (W4) specifying the average precipitation per time unit and per area unit around the location of the specific wind turbine (WT) during the operation time of the specific wind turbine (WT).

4. The method according to one of the preceding claims, wherein the one or more damage variables (D1, D2, ..., D19) comprise one or more of the following variables:
- one or more erosion occurrence variables (D1, D3, D5, D7), each specifying the number of erosion occurrences with a respective severity level and/or of a respective type in a predetermined region of at least one rotor blade of the specific wind turbine (WT) during the operation time of the specific wind turbine (WT);
- one or more erosion area variables (D2, D4, D6, D8), each specifying the total area of all erosions with a respective severity level and/or of a respective type occurred in a predetermined region of at least one rotor blade of the specific wind turbine (WT) during the operation time of the specific wind turbine (WT);
- one or more superficial damage occurrence variables (D9, D12, D18), each specifying the number of superficial damage occurrences with a respective severity level and/or of a respective type in a predetermined region of at least one rotor blade of the specific wind turbine (WT) during the operation time of the specific wind turbine (WT);
- one or more superficial damage area variables (D10, D13, D19), each specifying the total area of all superficial damages with a respective severity level and/or of a respective type occurred in a predetermined region of at least one rotor blade of the specific wind turbine (WT) during the operation time of the specific wind turbine (WT) ;
- a crack variable (D11) specifying the number of cracks occurred on at least one rotor blade of the specific wind turbine (WT) during the operation time of the specific wind turbine (WT);
- an accessory loss variable (D14) specifying the number of accessory parts lost from at least one rotor blade of the specific wind turbine (WT) during the operation time of the specific wind turbine (WT);
- a contamination occurrence variable (D15) specifying the number of contamination occurrences in a predetermined region of at least one rotor blade of the specific wind turbine (WT) during the operation time of the specific wind turbine (WT);
- a contamination area variable (D16) specifying the total area of all contaminations occurred in a predetermined region of at least one rotor blade of the specific wind turbine (WT) during the operation time of the specific wind turbine (WT);
- a lightning protection system failure variable (D17) specifying the number of failures of the lightning protection system of at least one rotor blade of the specific wind turbine (WT) which occurred during the operation time of the specific wind turbine (WT).

5. The method according to one of the preceding claims, wherein the discretization step a) is based on the Hartemink's information-preserving algorithm.

6. The method according to one of the preceding claims wherein the learning methods used in step b) comprise one or more of the following methods:
- PC algorithm,
- Grow-Shrink;
- Incremental Association Markov Blanket;
- Fast Incremental Association;
- Interleaved Incremental Association;
- Hill Climbing;
- Tabu Search.

7. The method according to one of the preceding claims wherein in step c) one or more cross validations are performed for each Bayesian network (BN1, BN2 ..., BNN) of the plurality of Bayesian networks (BN1, BN2 ..., BNN), where in each cross validation a parameter learning of the respective Bayesian network (BN1, BN2 ..., BNN) based on a first part of the modified data sets (DS') is performed, resulting in conditional probabilities between variables representing nodes linked by respective directed edges (E) in the respective Bayesian network (BN1, BN2 ..., BNN), where a prediction of the values of the one or more damage variables (D1, D2, ..., D19) of a second part of the modified data sets (DS') being different from the first part is performed by the respective Bayesian network (BN1, BN2 ..., BNN) in combination with the conditional probabilities (CP) based on the values of the one or more turbine variables (T1, T2, ..., T10) and weather variables (W1, W2, ..., W4) of the second part of the modified data sets (DS'), where a prediction quality parameter is determined for the respective cross validation by comparing the predicted values with the actual values of the one or more damage variables (D1, D2, ..., D19) of the second part of the modified data sets (DS'), where the prediction quality parameter is the performance measure (PM) in case of a single cross validation and where the average of the prediction quality parameters over the cross validations is the performance measure (PM) in case of several cross validations.

8. The method according to one of the preceding claims, wherein the performance measure (PM) is based the F1 score or the Precision or the Recall.

9. The method according to one of the preceding claims, wherein newly acquired data sets are added to the previously acquired data (DA), where the steps a) to d) are performed for the previously acquired data (DA) additionally comprising the newly acquired data sets, thus resulting in an updated prediction model.

10. A computer-implemented method for predicting rotor blade damages of a wind turbine, where the method processes the prediction model which is generated by the method according to one of claims 1 to 9 or which has been generated beforehand by the method according to one of claims 1 to 9, where the value of at least one damage variable (D1, D2, ..., D19) is predicted based on known values of at least one turbine variable (T1, T2, ..., T10) and at least one weather variable (W1, W2, ..., W4) valid for the wind turbine.

11. A computer program product with program code, which is stored on a non-transitory machine-readable carrier, for carrying out a method according to one of claims 1 to 10 when the program code is executed on a computer.

12. A computer program with program code for carrying out a method according to one of claims 1 to 10 when the program code is executed on a computer.
